# EUROPÄISCHE PATENTSCHRIFT

(11) **EP 1 625 056 B1**
(45) Veröffentlichungstag und Bekanntmachung des Hinweises auf die Patenterteilung: **17.02.2016**
(21) Anmeldenummer: 04729863.3
(22) Anmeldetag: 28.04.2004
(51) Int. Cl.: B60S 1/40, B60S 1/38

(54) **ANSCHLUSSVORRICHTUNG FÜR EIN WISCHERBLATT AM WISCHERARM EINER SCHEIBENWISCHERANLAGE**
CONNECTING DEVICE FOR A BLADE ON THE WIPER ARM OF A WINDSHIELD WIPER SYSTEM
DISPOSITIF DE RACCORDEMENT SERVANT A MONTER UNE RACLETTE SUR UN BRAS D'ESSUIE-GLACE D'UN SYSTEME D'ESSUIE-GLACE

(30) Priorität: 09.05.2003 DE 10320930; 09.05.2003 DE 10320932
(43) Veröffentlichungstag der Anmeldung: 15.02.2006
(73) Patentinhaber: Volkswagen Aktiengesellschaft, 38440 Wolfsburg (DE)
(72) Erfinder: OSTROWSKI, Wolfgang, 38446 Wolfsburg (DE)
(86) Internationale Anmeldenummer: PCT/EP2004/004447
(87) Internationale Veröffentlichungsnummer: WO 2004/098962

(56) Entgegenhaltungen:
- WO-A-00/05113
- WO-A-02/40328
- WO-A-02/052917
- WO-A-03/084789
- DE-A- 10 043 427
- DE-A- 19 729 865
- DE-B- 1 088 373
- US-B1- 6 499 181
- PATENT ABSTRACTS OF JAPAN Bd. 2003, Nr. 02, 5. Februar 2003 (2003-02-05) & JP 2002 308062 A (MARUENU KK), 23. Oktober 2002 (2002-10-23)

## Beschreibung

Die Erfindung betrifft eine Anschlussvorrichtung für ein Wischerblatt am Wischerarm einer Scheibenwischeranlage für ein Fahrzeug, insbesondere für ein in der Projektion auf die Scheibe neben dem Wischerarm angeordnetes Wischerblatt.

Die Anordnung eines Wischerblattes am Wischerarm einer Scheibenwischeranlage erfolgt über eine Anschlussvorrichtung, direkt oder über ein aufwendiges Bügelsystem, wobei die direkte Anordnung den Vorteil einer kleinen Bauhöhe mit sich bringt. Lösungen mit einer solchen Anordnung sind beispielsweise in der DE 23 24 702 A1, der DE 34 24 729 A1, der DE 197 29 864 A1, der DE 197 29 865 A1, der DE 199 35 861 A1, der DE 296 11 722 U1 und der WO 99/36300 beschrieben. Ein Wischerblatt für eine solche Anordnung weist in der Regel einen gekrümmten elastischen Träger und eine Wischerleiste mit einer Wischlippe auf, die infolge eines durch den Wischerarm auf das Wischerblatt aufgebrachten Anpressdruckes an der jeweiligen Scheibe des Fahrzeugs elastisch anliegt.

Der in der DE 197 29 864 A1 beschriebene Scheibenwischer weist ein Wischerblatt mit einem federelastischen Tragelement für die Wischerleiste auf, an dessen der Scheibe abgewandter Seite die mit dem angetriebenen Wischerarm verbindbare Anschlussvorrichtung gehaltert ist, wobei diese einer Ausnehmung in der Wischerleiste zugeordnet ist. Das aus zwei parallelen Federschienen gebildete Tragelement greift dabei in zwei einander gegenübliegend an der Wischerleiste ausgebildete Längsnuten ein und ist durch einen die äusseren Längskanten der Federschienen übergreifenden Halter (Haltevorrichtung) in den Längsnuten gesichert. Der Halter hat zwei sich in Längsrichtung des Tragelementes erstreckende, zur Scheibe stehend angeordnete und sich von dieser weg erstreckende flanschartige Ansätze, an denen ein quer zur Längserstreckung des Wischerblatte und annähernd in Wischrichtung desselben angeordneter Gelenkbolzen für eine am Wischerarm ausgebildete Lageraufnahme befestigt ist.

Des Weiteren ist mit der DE 100 03 589 A1 eine Anschlussvorrichtung für ein Wischerblatt zur Anordnung am Wischerarm einer Scheibenwischeranlage für Kraftfahrzeugscheiben beschrieben, die aus einem fest am Wischerblatt angeordneten Gelenkbolzen (Anschlussbolzen) und einer als Schwenklager am Wischerarm ausgebildeten hohlzylindrischen Rastaufnahme mit einer spaltförmigen Ausnehmung in radialer Richtung für diesen gebildet ist. Der Anschlussbolzemn ist abgeflacht, wobei die Dicke des abgeflachten Bereiches gleich oder grösser als die Breite der Ausnehmung ist. Die radiale Richtung, in der die Ausnehmung ausgebildet ist, ist in der vorbestimmten Arbeitsstellung des Wischerblattes am Wischerarm quer zur Abflachung und in der Montagestellung parallel zur Abflachung gegeben (Verrastungsstellung). Um eine Demontage oder Montrage eines Wischerblattes am Wischerarm zu ermöglichen, muss dieser von der Kraftfahrzeugscheibe weggeklappt werden, und das Wischerblatt ist in die Montage-bzw. Demontagestellung zu schwenken bzw. dem Wischerarm zuzuordnen und mit dem Anschlussbolzen ausser bzw. in Eingriff mit der Rastaufnahme zu bringen. Anschliessend sind das Wischerblatt in Parallelanordnung zum Wischerarm und dieser um im wesentlichen 90 in die Arbeits-und Anlagestellung an der Kraftfahrzeugscheibe zu schwenken. In dieser Stellung (Verrastungsstellung) ist das Wischerblatt auf einfache Weise zuverlässig am Wischerarm gehaltert. Allerdings sind die Montage bzw. Demontage des Wischerblattes relativ aufwändig.

Bei den vorbeschriebenen Anschlussvorrichtungen unterliegen sowohl die am Endstück des Wischerarmes als auch die am Wischerblatt angeordneten Vorrichtungselemente einem Verschleiss.

Aus der gattungsbildenden WO 02/40328 A1 ist eine Anschlussvorrichtung nach dem Oberbegriff der Ansprüche 1, 2, 3 und 4 bekannt, bei der die auf Verschleiss beanspruchten Elemente am Wischerblatt oder im wesentlichen am Wischerblatt angeordnet sind. Eine weitere derartige Anschlußvorrichtung ist in der WO 02/052917 A1 beschrieben.

Der Erfindung liegt die Aufgabe zugrunde, alternative Ausführungen für eine Anschlussvorrichtung nach dem Oberbegriff der Ansprüche 1, 2, 3 und 4 bereitzustellen, bei denen die auf Verschleiss beanspruchten Elemente ebenfalls am Wischerblatt oder im wesentlichen am Wischerblatt angeordnet sind.

Diese Aufgabe wird durch Anschlussvorrichtungen gemäß den Ansprüchen 1, 2, 3 und 4 gelöst. Vorteilhafte Ausgestaltungen sind in den Unteransprüchen aufgeführt.

Die Erfindung betrifft eine Anschlussvorrichtung für ein Wischerblatt am Wischerarm einer Scheibenwischeranlage, die (in bekannter Weise) eine wischerblatffeste Haltevorrichtung und einen an dieser angeordneten, sich quer zur Längsausdehnung des Wischerblattes erstreckenden Anschlussbolzen aufweist, bei der zwischen der Haltevorrichtung und dem Endstück des Wischerarmes ein Adapterbock angeordnet ist. Der Adapterbock ist an dem Anschlussbolzen angelenkt und an der Haltevorrichtung geführt, korrespondiert mit dem Endstück des Wischerarmes und ist mit diesem angepassten Endstück über eine lösbare Verbindung, beispielsweise eine Rastverbindung oder eine Verklinkung, am Wischerarm angeordnet. Dabei ist der Adapterbock derart ausgebildet, dass der Anschlussbolzen und damit auch das Wischerblatt eine durch die Wölbung der Fahrzeugscheibe bedingte und bestimmte Schwingbewegung gegenüber diesem und damit auch gegenüber dem Wischerarm ausführen kann. Der am Endstück des Wischerarmes in fester Position angeordnete Adapterbock als fester Bestandteil des Wischerblattes ist damit Bewegungsvermittler zwischen dem Wischerblatt und dem Wischerarm und zugleich Halterungselement für diesen. Die eine Bewegung des Wischerblattes gegenüber dem Wischerarm ermöglichenden Elemente und die Führung zwischen dem Adapterbock und der Haltevorrichtung sind damit ausschliesslich am Wischerblatt ausgebildet. Damit ist lediglich das Wischerblatt als Verschleissteil des Scheibenwischers anzusehen. Die Montage und Demontage eines Wischerblattes am Wischerarm ist auf einfache Weise und fehlerfrei möglich. Die hergestellte Verbindung zwischen diesen ist stabil und robust und hält insbesondere den Belastungen bei hohen Fahrgeschwindigkeiten stand.

Der Adapterbock ist vorzugsweise ein haubenartig gestaltetes Gussteil aus einem formbeständigen Kunststoff oder Metall, insbesondere Leichtmetall, das die Haltevorrichtung überdeckt und wenigstens teilweise an deren parallel zur Längserstreckung des Wischerblattes ausgebildeten Längsseiten anliegt, an dem Lager für den Anschlussbolzen ausgebildet sind. Diese können vorteilhaft als Rastaufnahmen für die Enden des Anschlussbolzens gestaltet sein, wobei die Rastaufnahmen jeweils mit einem Einführschlitz versehen sind, der eine Einführöffnung auf der dem Wischerblatt zugewandten Seite des Adapterbockes aufweist. Dadurch ist der Adapterbock auf einfache Weise bei in die beiden Einführschlitze eingeführtem Anschlussbolzen durch eine Druckausübung, durch die der Anschlussbolzen mit den Rastaufnahmen in Eingriff gebracht wird, am Anschlussbolzen und damit auch an der Haltevorrichtung anordbar. Der Adapterbock wird somit gelenkig an der Haltevorrichtung gehaltert und durch die teilweise Anlage an dieser verkippungsfrei geführt.

Das Endstück des Wischerarmes ist zweckmässig so ausgebildet, dass dieses bei Anordnung des Wischerblattes am Wischerarm den Adapterbock formschlüssig oder im wesentlichen formschlüssig übergreift, so dass das Wischerblatt auch dadurch in seiner Position gegenüber der Fahrzeugscheibe stabil und verkippungsfrei gehaltert ist. Gegenüber dem Wischerblatt ist der Adapterbock im Abstand angeordnet, um diesem eine schwingende Bewegung um den Anschlussbolzen zu ermöglichen, die, bedingt durch die Wölbung der Fahrzeugscheibe, ermöglicht werden muss, damit das Wischerblatt in jeder Position auf der Fahrzeugscheibe mit dem erforderlichen Anpressdruck an dieser anliegt. Zur Bewegungsbegrenzung können auf der dem Wischerblatt zugewandten Seite des Adapterbockes beidseits des Anschlussbolzens Anschlagflächen ausgebildet sein.

In einem weiteren Ausführungskomplex untergreift das Endstück mit zwei seitlich angeordneten Führungsschienen den Adapterbock. Dieser weist auf der dem Wischerblatt abgewandten Seite eine federelastische Zunge mit einem Rastknopf für eine am Endstück ausgebildete Rastöffnung auf. Zudem sind am Adpaterbock und/oder an der Haltevorrichtung Arretierungsmittel vorgesehen, mit denen in der Arbeitsstellung des Scheibenwischers an der Fahrzeugscheibe am Endstück ausgebildete Anschlagmittel in Eingriff stehen. Die grundsätzlich derart gestalteten Ausführungen verhindern eine Fehimontage des Wischerblattes am Wischerarm beim Versagen der Verrastung des Endstückes mit dem Adapterbock. Spiegelbildliche Wischerblätter, z. B. bei einer Gegenlauf-Scheibenwischeranlage, können nur am jeweils vorgesehenen Wischerarm montiert werden.

Die Erfindung betrifft auch eine alternative Anschlussvorrichtung. Bei dieser ist der Anschlussbolzen beidendig abgeflacht und zu Anschlusszapfen geformt, oder alternativ dazu, in Form zweier abgeflachter Anschlusszapfen für hohlzylindrische Rastaufnahmen mit jeweils einer in radialer Richtung ausgebildeten Ausnehmung ausgebildet. Dabei ist der Anschlussbolzen bzw. sind die Anschlusszapfen drehbeweglich um seine/ihre Achse an der Haltevorrichtung gelagert und drehfest mit einem Adapterbock verbunden, und die Rastaufnahmen sind fest am Endstück des Wischerarms angeordnet. Alternativ dazu können der Anschlussbolzen bzw. die Anschlusszapfen auch fest am Wischerarm und die Rastaufnahmen schwenkbar an der Haltevorrichtung angeordnet und dabei drehfest mit dem Adapterbock verbunden sein. Dabei sind die Anschlusszapfen in einer Montagestellung mit ihren abgeflachten Seiten in Richtung der Ausnehmungen ausgerichtet, entweder durch Drehen derselben, oder, bei fest am Wischerblatt angeordneten Anschlusszapfen, durch Schwenken des gesamten Wischerblattes, und in der Betriebsstellung an der Fahrzeugscheibe, in der die Anschlusszapfen bei mit dem Endstück verrastetem Adapterbock mit den Ausnehmungen im formschlüssigen Eingriff miteinander stehen, im wesentlichen quer zur Richtung der Ausnehmungen ausgerichtet und somit in diesen verrastet.

Auch eine derartige Anschlussvorrichtung ermöglicht eine einfache Montage eines Wischerblattes am Wischerarm und stellt zugleich eine zuverlässige Verbindung zwischen diesen in der Betriebsstellung (zugleich Verrastungsstellung) an der Fahrzeugscheibe dar. Fehimontagen werden vermieden. Die Anschlussvorrichtung stellt auch eine durch die Wölbung der Fahrzeugscheibe bedingte und bestimmte Schwingbewegung des Wischerblattes am Wischerblatt sicher, da die Anschlusszapfen und die Rastaufnahmen eine relative Drehbewegung zueinander ausführen können. Die hergestellte Verbindung ist stabil und robust und hält insbesondere auch den Belastungen bei hohen Fahrgeschwindigkeiten stand.

In weiteren Unteransprüchen zu diesem Ausführungskomplex sind verschiedene Ausführungsformen aufgeführt.

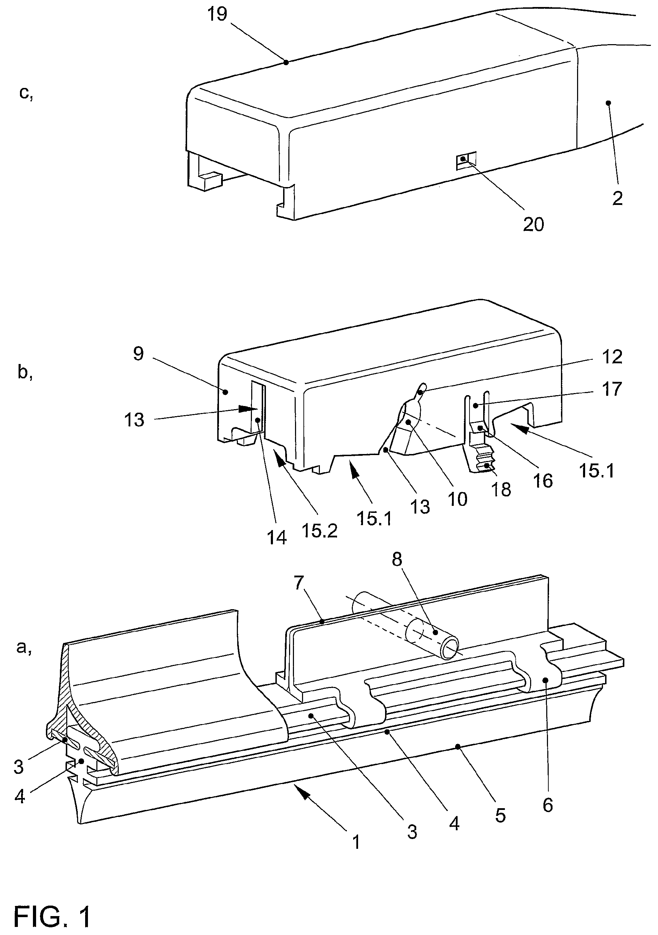

Nachfolgend werden zahlreiche Ausführungsformen anhand von Zeichnungen, Fig. 1 bis Fig. 15, erläutert. Alle diese Ausführungsformen ermöglichen eine einfache und somit rasche Demontage und Montage des mit einer solchen Anschlussvorrichtung ausgerüsteten Wischerblattes am zugeordneten Wischerarm eines Scheibenwischers.

In den Fig. 1a bis c ist eine Anschlussvorrichtung für ein Wischerblatt 1 am Wischerarm 2 einer Scheibenwischeranlage gezeigt. Das Wischerblatt 1 weist ein aus zwei Federschienen 3 gebildetes Tragelement für eine Wischerleiste 4 mit einer Wischlippe 5 und eine an den Aussenkanten der Federschienen 3 vermittels krallenartiger Füsse 6 klemmend befestigte und die Wischerleiste 4 auf der der Wischlippe 5 abgewandten Seite der Federschienen 3 übergreifende Haltevorrichtung 7 mit einem quer zur Längserstreckung des Wischerblattes 1 in einer Durchgangsbohrung befestigten Anschlussbolzen 8 auf. Die Haltevorrichtung 7 ist im Bereich einer unterbrochenen Spoilerleiste angeordnet, die ebenfalls an den Aussenkanten der Federschienen 3 gehaltert ist und die Wischerleiste 4 übergreift und von der ein Abschnitt des einen Teils dargestellt ist. Der Anschlussbolzen 8 dient der drehbeweglichen Anordnung eines Adapterbockes 9, der in Fig. 1b dargestellt ist.

Dieser Adapterbock 9 ist ein haubenartiges, quaderförmig gestaltetes Al-Gussteil, das im montierten Zustand die Haltevorrichtung 7 umschliesst und an dessen Längsseitenwänden jeweils ein Lager 10 für den Anschlussbolzen 8 ausgebildet ist. Die Lager 10 sind auf der dem Wischerblatt 1 zugewandten Seite des Adapterbockes 9 mit einem Einführspalt 11 für den Anschlussbolzen 8 versehen und weisen auf der dem Einführspalt 11 gegenüberliegenden Seite einen Schlitz 12 zur elastischen Aufweitung des Lagers 10 auf. An seinen beiden Stirnseiten ist der Adapterbock 9 mit einer Ausnehmung 13 versehen, die jeweils zwei gegenüberliegende Führungsflächen 14 ausbildet, mit denen der Adapterbock 9 an der Haltevorrichtung 7 bewegbar anliegt und durch die dieser geführt ist. Durch die drehbewegliche Anordnung des Adapterbockes 9 am Anschlußbolzen 8 und dessen stirnseitige Führung an der Haltevorichtung 7 ist eine Schwingbewegung um den Anschlußbolzen 8 sichergestellt.

Zur Sicherstellung einer unbehinderten Schwingbewegung bildet der Adapterbock 9 auf seiner dem Wischerblatt 1 zugewandten Seite gegenüber den Rändern der Federschienen 3 einen Spalt aus und weist zudem Ausnehmungen 15.1 und 15.2 auf, die eine Neigung desselben um den Anschlußbolzen 8 unbehindert ermöglichen, wobei die Ausnehmungen 15.1 zur Aufnahme der Füße 6 bei einer entsprechenden Neigung dienen.

Des Weiteren ist der Adapterbock 9 an seinen beiden Längsseiten jeweils mit einer Rastnase 16 versehen, die an einer elastisch biegbaren Zunge 17 an der Wandung des Adapterbockes 9 ausgebildet ist, die an ihrem freien Ende zu einer leicht nach außen abstehenden Bedienungshandhabe 18 ausgebildet ist.

Der Wischerarm 2 ist an seinem freien Ende zu einem an den Adapterbock 9 angepaßten Endstück 19 ausgebildet, das auf dem Adapterbock 9 im wesentlichen formschlüssig anordbar, derart, daß das Wischerblatt 1 unbehindert Schwingbewegungen ausführen kann. Zur Fixierung am Adapterbock 9 weist das Endstück 19 mit den Rastnasen 16 korrespondierende Rastausnehmungen 20 auf, in die die Rastnasen 16 im montierten Zustand des Wischerblattes 1 eingreifen, wozu dieses einfach in das Endstück 19 eindrückbar ist. Zur Demontage des Wischerblattes 1 werden die Bedienungshandhaben 18 zusammengedrückt, wodurch die Rastnasen 16 außer Eingriff mit den Rastausnehmungen 20 gelangen, und das Wischerblatt 1 wird vom Endstück 19 abgezogen.

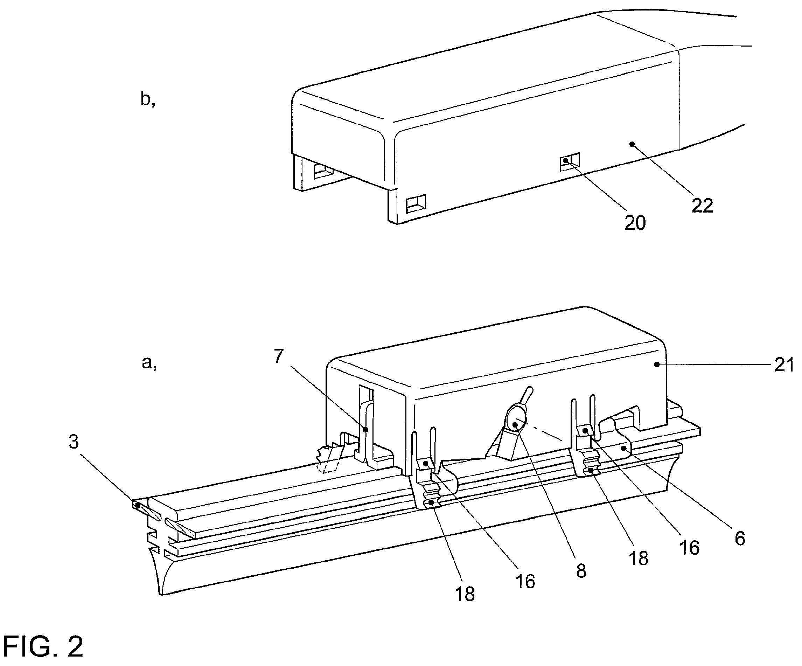

Die Fig. 2a und 2b zeigen die Ausführung einer Anschlußvorrichtung, die sich von der vorbeschriebenen lediglich dadurch unterscheidet, daß an den Längsseiten des Adapterbockes 21 jeweils zwei Rastnasen 16 mit Bedienungshandhaben 18 angeformt sind, die mit im Endstück 22 des Wischerarmes 2 eingebrachten Rastausnehmungen 20 in Eingriff bringbar sind. Die Ausführung trägt zur Erhöhung der Stabilität der Befestigungsanordnung bei. Fig. 2a zeigt den bereits an der Haltevorrichtung 7 montierten Adapterbock 21, über den das Wischerblatt 1 auf einfache Weise in das Endstück 22 eindrückbar ist.

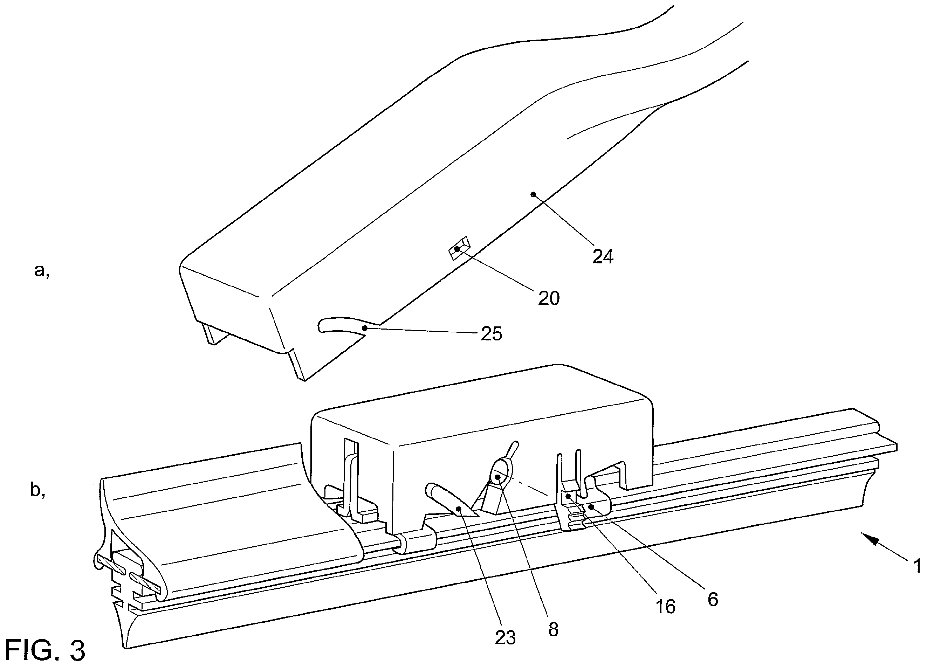

Bei der Ausführung nach den Fig. 3a und 3b ist das eine Rastnasenpaar durch zwei gekrümmte Gleitklötzer 23 ersetzt, die mit im Endstück 24 (Fig. 3b) ausgebildeten und in gleicher Weise gekrümmten Spaltöffnungen 25 in Eingriff bringbar sind. Dabei sind die Krümmungen gegenüber den auf der anderen Seite des Anschlußbolzens 8 ausgebildeten Rastnasen 16 leicht konvex und dienen ebenfalls der Erhöhung der Stabilität der Befestigungsanordnung im Sinne einer zusätzlichen Sicherung. Allerdings ist die Montage des Wischerblattes 1 am Endstück 24 mit einem Einführen der Gleitklötzer 23 in die Spaltöffnungen 25 verbunden und damit etwas erschwert gegenüber der Ausführung nach den Fig. 2. Mit zunehmendem Eindringen der Gleitklötzer 23 in die Spaltöffnungen 25 wird der Neigungswinkel des Wischerblattes 1 gegenüber dem Endstück 24 infolge der Krümmung immer geringer und ist in der Verrastungsstellung, in der die Rastnasen in die Rastausnehmungen 20 eingeschnappt sind, Null.

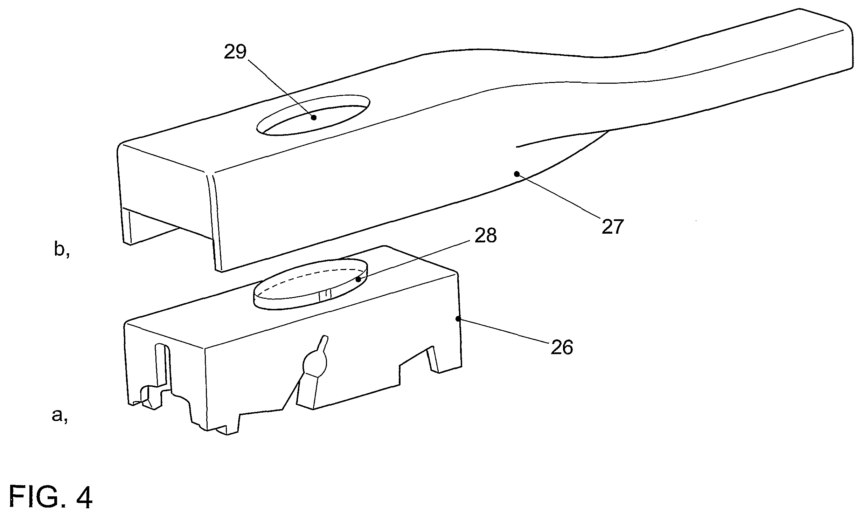

Ein weiter Ausführung einer Anschlußvorrichtung zeigen die Fig. 4a und 4b. Bei dieser ist der Adapterbock 26 auf seiner dem Wischerblatt 1 abgewandten und dem Endstück 27 zugewandten Seite mit einem langgestreckten, in Richtung auf den Adapterbock 26 federkraftbeaufschlagten (nicht dargestellt) Drehknopf 28 versehen, der mit einer im Endstück 27 angeordneten und an dessen Gestalt angepaßten Öffnung 29 in Eingriff bringbar ist. In der Befestigungsposition, in der der Adapterbock 26 in das Endstück 27 eingeführt ist, ragt dieser Drehknopf 28 durch die Öffnung 29 des Endstückes 27 und über diese hinaus und kann gegriffen, leicht herausgezogen und verdreht werden, insbesondere um 90°, wobei das Herausziehen des Drehknopfes nur so weit ermöglicht ist, bis dessen Unterseite das Niveau der Oberseite des Endstückes 27 hat und verdreht werden kann. Durch die Gestaltung von Drehknopf 28 und Öffnung 29 und das Verdrehen des Drehknopfes 28 wird der Adapterbock 26 mit dem Endstück 27 verriegelt.

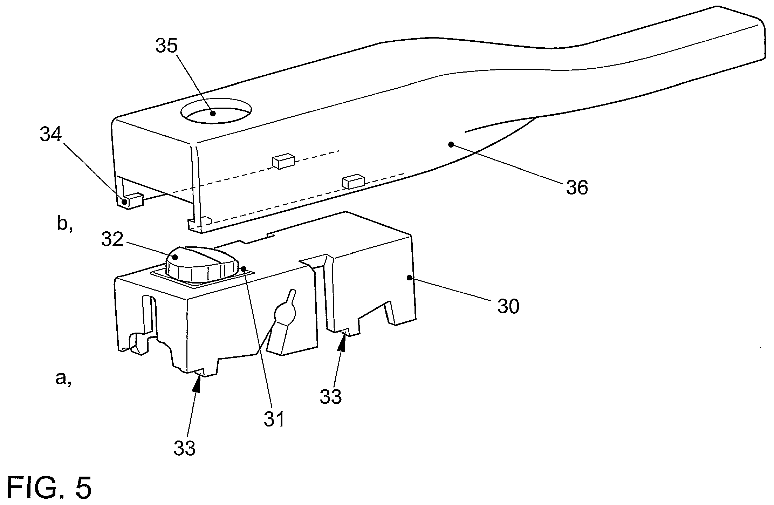

Fig. 5a und 5b zeigen eine weitere Ausführung einer Anschlußvorrichtung mit einer Verrastungseinrichtung. Am Adapterbock 30 auf der dem Wischerblatt 1 abgewandten Seite ist eine federelastische Zunge 31 mit einem Rastknopf 32, und auf der dem Wischerblatt 1 zugewandten Seite an den Längswandungen des Adapterbockes 30 sind Rastausnehmungen 33 mit Anschlagflächen für ein mit Rastvorsprüngen 34 für diese und mit einer Öffnung 35 versehenes Endstück 36 angeordnet. Zur Montage des Wischerblattes 1 wird der Adapterbock 30 in das Endstück 36 so weit eingeführt, bis dieser unter elastischem Herunterdrücken des Rastknopfes 32 mit der Zunge 31 an der oberen Wandung des Endstückes 36 anstößt. Anschließend wird der Wischerarm 1 gegenüber dem Endstück 36 in Längsrichtung derselben verschoben, bis die Rastvorsprünge 34 vollständig mit den Rastausnehmungen 33 in Eingriff stehen. In dieser Position korrespondiert der Rastknopf 32 mit der Öffnung 35 und schnappt in diese ein, wodurch der Adapterbock fest mit dem Endstück 36 verbunden ist. Eine Demontage des Wischerblattes 1 erfolgt durch Herunterdrücken des Rastknopfes 32 und anschließendes Verschieben des Wischerblattes 1 aus der Verrastungsstellung.

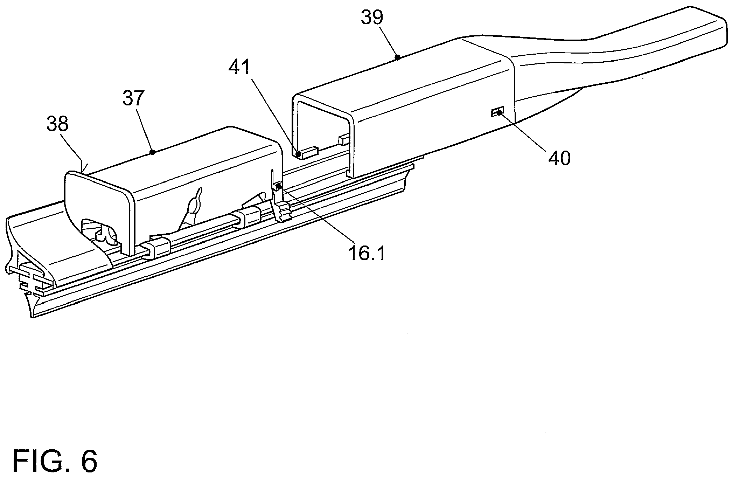

Bei der Ausführung einer Anschlußvorrichtung nach Fig. 6 ist der quaderförmige Adapterbock 37 auf der dem Wischerarm abgewandten Seite mit einer Stirnwandung versehen, die über die Seitenwandungen vorsteht und eine Anschlagfläche 38 für das Endstück 39 ausbildet. Zudem ist am Adapterbock 37 an dessen beiden Längsseiten eine Rastnase 16.1 angeformt. Das Endstück 39 weist mit den Rastnasen 16.1 in der Verrastungsstellung mit dem Adapterbock 37 korrespondierende Rastausnehmungen 40 auf und an der Innenseite seiner längsseitigen Seitenwandungen nach innen weisende Vorsprünge 41 zum Untergreifen des Adapterbockes 37. Durch eine Schiebewegung entlang des Endstückes 39 wird das mit dem Adapterbock 37 versehene Wischerblatt 1 bis zum Anschlag der Stirnseite des Endstückes 39 an der Anschlagfläche 38 in dieses eingeschoben, wobei der Adapterbock 37 von den Vorsprüngen 41 untergriffen wird. In dieser Endstellung gelangen die Rastnasen 16 mit den Rastausnehmungen 40 in Eingriff und legen den Adapterbock 37 am Endstück fest.

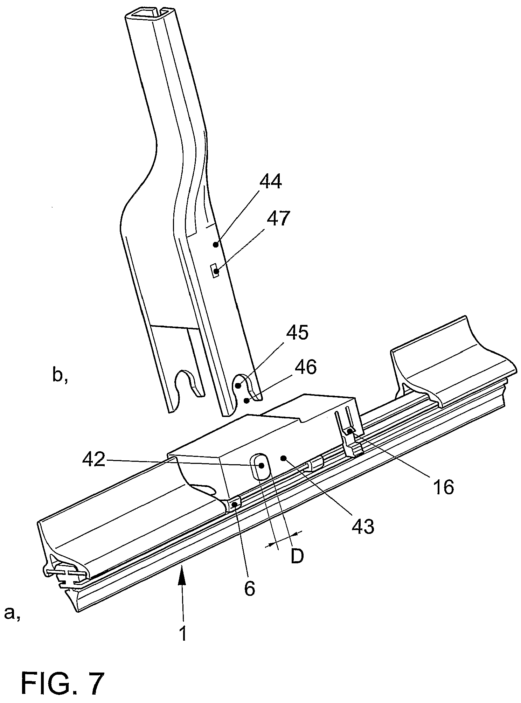

Die Ausführung einer Anschlußvorrichtung nach den Fig. 7a und 7b ist aus einem an einem Anschlußbolzen 42 gelenkig gehalterten Adapterbock 43 und einem entsprechend angepaßten Endstück 44 gebildet. An den Längsseiten des Adapterbockes 43 stehen die Enden des Anschlußbolzens 42 vor und sind abgeflacht, wobei die Abflachung D im wesentlichen senkrecht zur Längserstreckung des Wischerblattes 1 ausgebildet ist. Der Adapterbock 43 weist zudem zwei Rastnasen 16 auf. Das Endstück 44 ist stirnseitig mit zwei Rastaufnahmen 45 mit jeweils einer Einführöffnung 46 für die abgeflachten Enden und mit Rastausnehmungen 47 für die Rastnasen 16 versehen, wobei die Dicke des abgeflachten Bereiches (D) im wesentlichen gleich der Breite der Einführöffnung 46 an deren schmalster Stelle ist. Das Wischerblatt 1 wird senkrecht zum Endstück 44 mit den Enden der Anschlußbolzen 42 in die Rastaufnahmen 45 eingeführt, um 90° in Parallelstellung zum Wischerarm 2 und damit in die Verrastungsstellung der Rastnasen 16 mit den Rastausnehmungen 47 gebracht. In deren Verrastungsstellung sind die Einführöffnungen 46 parallel zum Wischerblatt 1 und senkrecht zur Abflachung D angeordnet, so daß die Enden des Anschlußbolzens 42 infolge des Einrastens der Rastnasen 16 ebenfalls fixiert sind und das Wischerblatt 1 am Wischerarm 2 festgelegt ist.

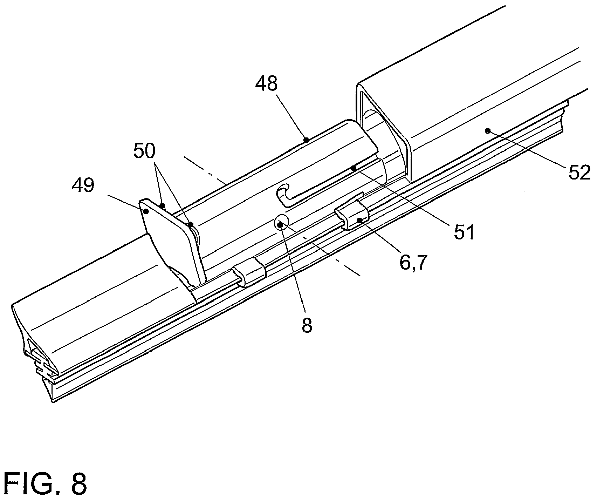

Fig. 8 zeigt eine andere Gestaltung einer Anschlußvorrichtung. Bei dieser ist der Adapterbock 48 ein Gußteil mit einer zylinderförmigen Mantelfläche und, wie bei den vorstehend beschriebenen Ausführungen, am Anschlußbolzen 8 der Haltevorrichtung 7 gelenkig und im Abstand vom Wischerblatt 1 angeordnet. An der dem Ende des Wischerarmes abgewandten Stirnseite ist der Adapterbock 48 mit einer Stirnwandung 49 versehen, die über die Mantelfläche vorsteht und zugleich ein Widerlager für an dieser angeordnete Federmittel 50 bildet. In der Mantelfläche sind achsparallel und an dieser gegenüberliegend, also um 180° versetzt, zwei Führungsnuten 51 mit jeweils einer 180°-Abbiegung an dem der Stirnwandung 49 zugewandten Ende versehen. Im Innern des Endstückes 52, das an die Mantelfläche angepaßt ist, sind zwei Führungsstifte (nicht dargestellt) für den Eingriff mit diesen Führungsnuten 51 angeordnet. Zur Montage wird das Wischerblatt 1 um seine Längsachse so weit verdreht, bis die Führungsnuten 51 mit den Führungsstiften korrespondieren und anschließend in das Endstück 52 eingschoben und am Anschlag, wie bei einem Bajonattverschluß, verdreht und verrastet, wobei die Federmittel 50 den Adapterbock 48 in die Verrastungsstellung drücken und in dieser halten.

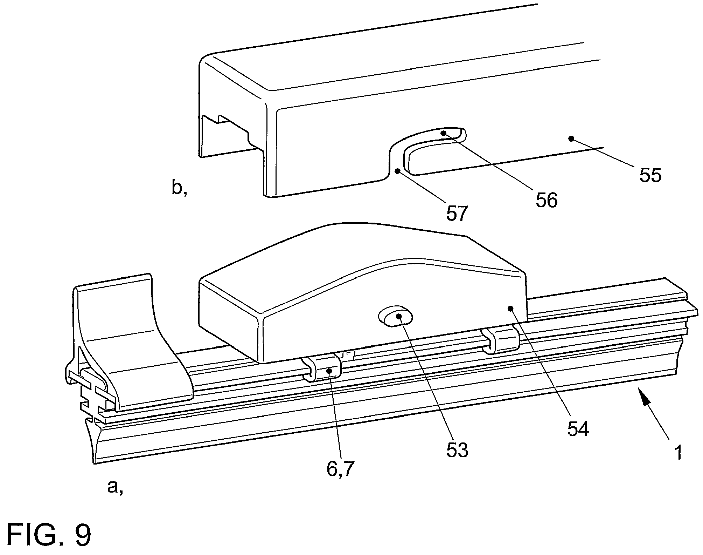

Die in Fig. 9 gezeigte Anschlußvorrichtung weist einen fest mit der Haltevorrichtung 7 verbundenen Anschlußbolzen 53 auf, dessen Enden beidseits eines Adapterbockes 54 vorstehen und parallel zum Wischerblatt 1 abgeflacht und dabei gegenüber diesem konkav leicht gekrümmt sind. Der Adapterbock 54 ist im Gegensatz zu den vorstehend beschriebenen Ausführungsformen mit der Haltevorrichtung 7, von der lediglich die Füße 6 zu sehen sind, fest verbunden und auf der dem Wischerblatt 1 abgewandten Seite konkav gewölbt. Das Endstück 55 weist in seinen beiden Längswandungen jeweils eine langgestreckte und mit dem jeweiligen vorstehenden Ende des Anschlußbolzens 53 und dessen Krümmung korrespondierende Kulissenführung 56 mit einem Einführspalt 57 auf der dem Wischerarm 1 zugewandten Seite auf. Der Einführspalt 57 ist dabei so breit wie das Ende des Anschlußbolzens 53 lang ist. Eine Montage des Wischerblattes 1 erfolgt in Parallelausrichtung zum Endstück 55, in dem der Anschlußbolzen 53 über den Einführspalt 57 und danach durch Verschieben des Wischerblattes 1 in Richtung Wischerarm 2 in die Kulissenführung 56 geschoben wird. In dieser ist der Anschlußbolzen 53 hin- und herbeweglich geführt, und kann, bedingt durch die Krümmungen, die beim Betrieb des Scheibenwischers erforderlichen Schwingbewegungen ausführen.

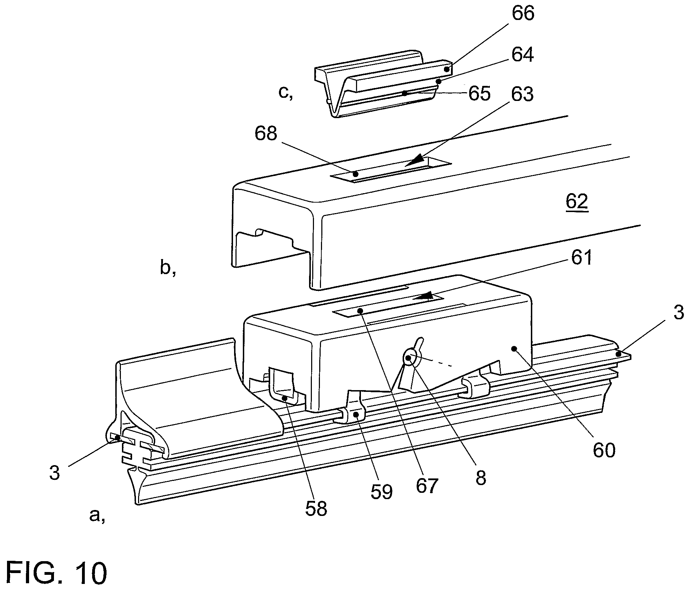

Die in Fig. 10a bis 10c gezeigte Anschlußvorrichtung weist eine nicht weiter zu erkennende U-förmige Haltevorrichtung 58 auf, die mit krallenartigen Füßen 59 an den Außenkanten der Federschienen 3 klemmend befestigt ist. Der an der Haltevorrichtung 58 am Anschlußbolzen 8 angelenkte Adapterbock 60 ist mit einer auf der dem Wischerblatt 1 abgewandten Seite mit einer rechteckigen Öffnung 61 im Bereich zwischen den Schenkeln der Haltevorrichtung 58 versehen, die mit einer am Endstück 62 ausgebildeten rechteckigen, jedoch breiteren Öffnung 63 korrespondiert. Diesen beiden Öffnungen 61, 63 ist ein V-förmiges, elastisch zusammendrückbares Rastelement 64 zugeordnet (Fig. 10c), das mit an dessen Außenseiten angeordneten Rastschienen 65 und an den freien Schenkelenden mit nach außen weisenden Anschlagschienen 66 versehen ist, wobei der Abstand zwischen den Rastschienen 65 und den Anschlagschienen 66 der Summe der Dicken der dem Wischerblatt 1 abgewandten Wandungen 67 und 68 des Adapterbockes 60 und des Endstückes 62 entspricht. Zur Montage des Wischerblattes 1 am Wischerarm 2 wird dieses bis zum Anschlag des Adapterbockes 60 an der Wandung 68 in das Endstück 62 eingebracht und durch Einführen des elastisch zusammengedrückten Rastelementes 64 mit sich anschließendem Aufweiten desselben verrastet.

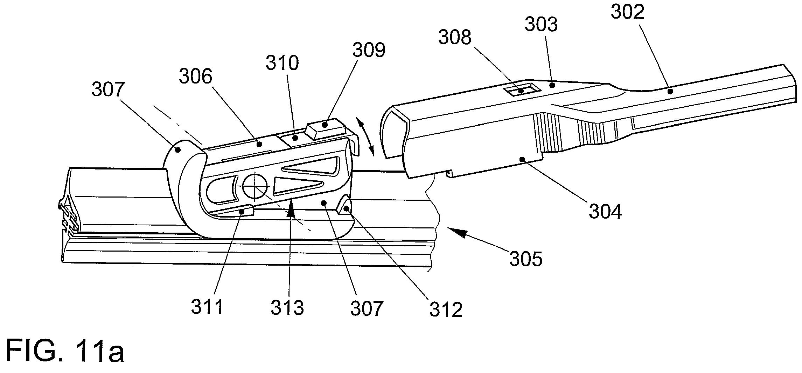

In den Fig. 11a bis c ist eine Anschlussvorrichtung dargestellt, bei der das am Wischerarm 302 ausgebildete Endstück 303 zwei Führungsschienen 304 für einen Eingriff mit einem am Wischerblatt 305 vermittels eines Anschlussbolzens schwenkbar gehalterten Adapterbock 306 und der Haltevorrichtung 307 für diesen sowie eine Rastöffnung 308 für einen am Adapterbock 306 auf einer federelastischen Zunge 310 angeordneten Rastknopf 309 aufweist. Überdies ist an den beiden Außenseiten des Adapterbockes 306 jeweils ein dem Endstück 303 entgegengerichteter, eine Schwenkbewegung des Adapterbockes 306 zulassender keilförmiger Anschlagbock 311 für die Führungsschienen 304 ausgebildet. Für diese weist auch die Haltevorrichtung 307 an ihrem wischerarmseitigen Ende beidseits jeweils einen Arretierungsbock 312 auf. Die Führungsschienen 304 dienen mit ihren beiden Stirnseiten als Anschlagmittel für die Anschlagböcke 311 und für die Arretierungsböcke 312.

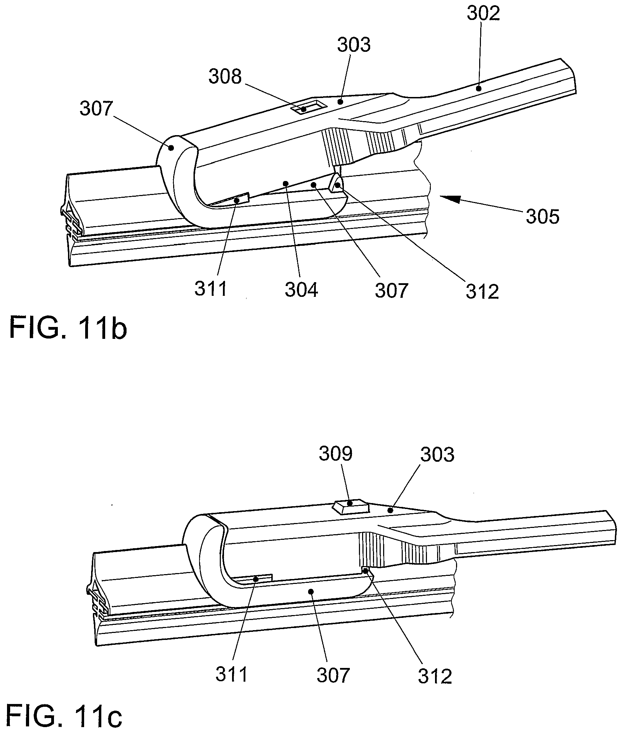

Die Fig. 11b und c zeigen die Montage des Wischerblattes 305 am Endstück 303. Dazu wird der Adapterbock 306 derart in das Endstück 303 eigeschoben, dass dessen untere Kanten 313 (Fig. 11a) von den Führungsschienen 304 untergriffen werden, und so weit geschoben, bis die in Einschubrichtung vordere Strinseite der jeweiligen Führungsschiene 304 an dem dieser entgegengerichteten Anschlagbock 311 anstößt (Fig. 11b). In dieser Stellung rastet dann der Rastknopf 309 in die Rastöffnung 308 ein, und das Endstück 303 und der Adapterbock 306 sind miteinander verrastet, so dass das Wischerblatt 305 am Wischerarm 302 fixiert ist. Anschließend wird dieser (302) mit dem Endstück 303 und mit dem Adapterbock 306 (nicht sichtbar) in die in Fig. 11c gezeigte Arbeitsstellung geschwenkt, wobei die Führungsschienen 304 die Arretierungsböcke 312 hintergreifen. Damit ist das Endstück 303, auch unabhängig vom Einrasten des Rastknopfes 309 in die Rastöffnung 308, an der Haltevorrichtung 307 unverlierbar befestigt, kann jedoch im Betrieb an der Fahrzeugscheibe (Arbeitsstellung) scheibenkrümmungsbedingte Schwingbewegungen gegenüber dieser um den Anschlussbolzen ausführen.

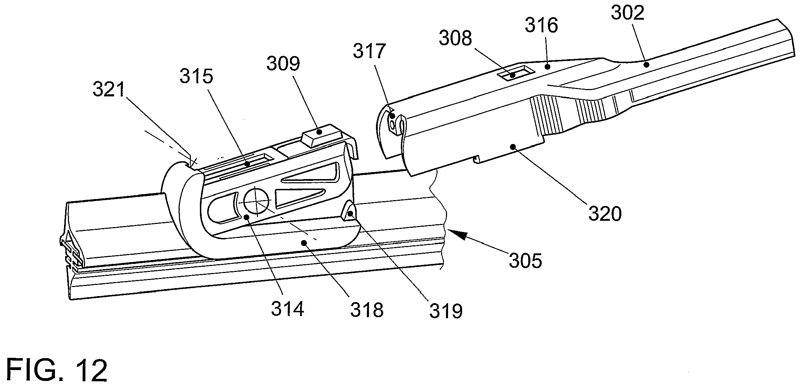

Fig. 12 zeigt eine weitere Ausführung, die sich von der vorbeschriebenen durch die Anordnung der Arretierungs- und Anschlagmittel unterscheidet. Am Adapterbock 314 ist auf der dem Wischerblatt 305 abgewandten Seite eine Führungsnut 315 für eine am Endstück 316 stirnseitig angeordnete Anschlaglasche 317 eingebracht. Die Haltevorrichtung 318 weist am wischerarmseitigen Ende beidseits einen Arretierungsbock 319 für jeweils eine am Endstück angeformte Führungsschiene 320 und auf der dem Wischerarm abgewandten Seite eine Einsenkung mit einer Anschlagfläche 321 für die Anschlaglasche 317 auf.

Die Montage eines Wischerblattes 305 erfolgt in der gleichen Weise wie bei der Ausführung nach den Fig. 11 a bis c, wobei der Adapterbock 314 bei Untergreifen desselben durch die Führungsschienen 320 so weit in das Endstück eingeschoben wird, bis die Anschlaglasche 317 an der Anschlagfläche 321 anschlägt. In dieser Position greift der Rastknopf 309 in die Rastöffnung 308 ein, so dass das Wischerblatt 305 am Endstück 316 des Wischerarms 302 fixiert ist. Bei Schwenken des Endstückes 316 mit dem Adapterbock 314 in die Arbeitsstellung (vgl. Fig. 11c) untergreifen die beiden Führungsschienen 320 die Arretierungsböcke 319. Damit ist das Wischerblatt 305 unverlierbar am Wischerarm 302 befestigt, auch wenn eine Verrastung des Rastknopfes 309 mit der Rastöffnung 308 fehlerhafterweise nicht statgefunden hat.

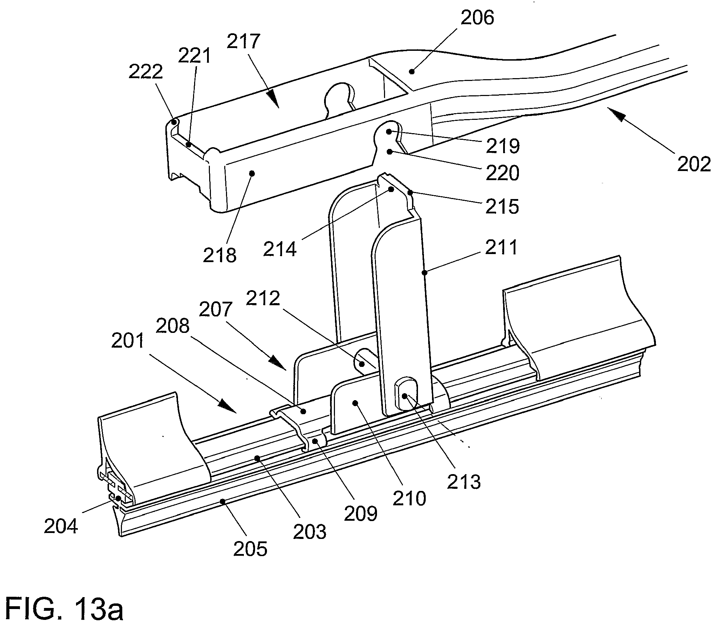

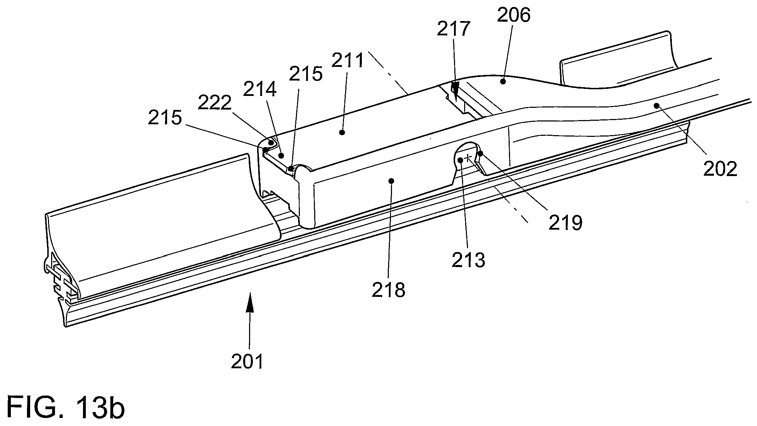

In Fig. 13a und b ist eine alternative Anschlußvorrichtung für ein Wischerblatt 201 am Endstück 206 eines Wischerarmes 202 eines Scheibenwischers einer nicht dargestellten Scheibenwischeranlage gezeigt. Das Wischerblatt 201 weist ein aus zwei Federschienen 203 gebildetes Tragelement für eine Wischerleiste 204 mit einer Wischlippe 205 und eine Haltevorrichtung 207 auf. Diese übergreift mit einer Grundplatte 208 die Wischerleiste 204 auf der der Wischlippe 205 abgewandten Seite und ist mit krallenartigen Füßen 209 an den Außenkanten der Federschienen 203 klemmend befestigt. An der Grundplatte 208 sind zwei Befestigungslaschen 210 parallel zur Längserstreckung des Wischerblattes 201 und nach der der Wischerleiste 204 abgewandten Seite erstreckt ausgebildet, an denen ein als Verschlussbügel ausgebildeter Adapterbock 211 U-förmigen Querschnitts vermittels eines Bolzens 212 schwenkbar gelagert ist, der an seinen beiden freien Enden jeweils zu einem abgeflachten Anschlusszapfen 213 geformt ist, wobei der Bolzen 212 drehbeweglich an den Befestigungslaschen 210 gehaltert und der Verschlussbügel 211 drehfest mit dem Bolzen 212 und den Anschlusszapfen 213 verbunden ist. Am Verschlussbügel 211 ist eine Zunge 214 mit zwei seitlich ausgebildeten Absenkungen 215 angeformt.

Das an den Adapterbock 211 angepasste Endstück 206 weist auf der dem Wischerblatt 210 abgewandten Seite eine Ausnehmung 217 und an seinen beiden längserstreckten Seitenwänden 218 jeweils eine hohlzylindrische Rastaufnahme 219 mit einer in radialer Richtung ausgebildeten Ausnehmung 220 zur formschlüssigen Aufnahme des Adapterbockes 211 auf, wobei die lichte Weite der gebildeten Einführöffnung für diesen der Dicke des abgeflachten Anschlusszapfens 213 und der Durchmesser der Rastaufnahme 219 dem Durchmesser des Anschlusszapfens 213 entsprechen. An der Stirnseite des Endstückes 206 sind am oberen Ende einer Einsenkung 221 zwei Rastvorsprünge 222 ausgebildet. Fig. 13a zeigt das Wischerblatt 201 in der Montagestellung zum Wischerarm 202, in der der Adapterbock 211 aufgestellt ist und die Anschlusszapfen 213 mit ihren abgeflachten Seiten im wesentlichen senkrecht zum Wischerblatt 201 angeordnet sind.

Zur Montage des Wischerblattes 201 wird der als Verschlussbügel ausgebildete Adapterbock 211 durch die Ausnehmung 217 geschoben, bis die beiden Anschlussbolzen 213 in die Rastaufnahmen 219 eingreifen. Anschließend wird der Adapterbock 211 um 90° in Richtung des Endstückes 206 geschwenkt. Dabei liegen die beiden Schenkel des Adapterbockes 211 formschlüssig an der Innenseite der Befestigungslaschen 210 an, und die Anschlusszapfen 213 verrasten formschlüssig mit den Rastaufnahmen 219. In seiner Endstellung verrastet der Verschlussbügel 211 mit der an diesem angeformten Zunge 214 im Bereich deren Absenkung 215 mit den Rastvorsprüngen 222. In dieser Verrastungsstellung (Fig. 13b) befinden sich die Anschlusszapfen 213 in Parallellage zum Wischerblatt 201 und quer zu den radial angeordneten Ausnehmungen 220 und diese zum Endstück 206 und zum Wischerarm 202 ebenfalls, wobei zwischen den Unterkanten des Endstückes 206 und dem Wischerblatt 201 so viel Spielraum vorgesehen ist, dass das Wischerblatt 201 betriebsbedingte Schwingungen am Wischerarm 202 ausführen kann.

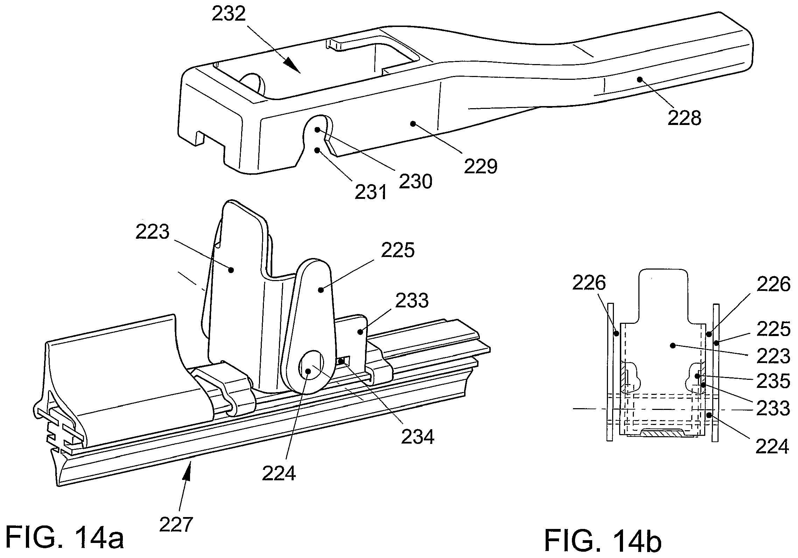

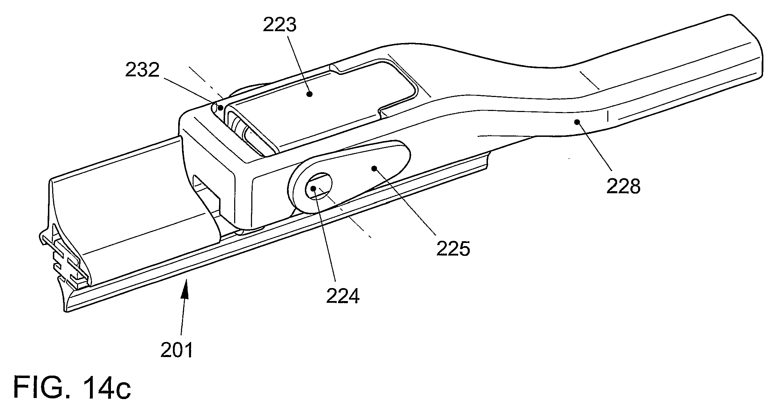

Im Unterschied zu der vorbeschriebenen Ausführung sind bei der in den Fig. 14 a bis c gezeigten Ausführung einer Anschlussvorrichtung an den freien Enden der drehfest mit einem als Verschlussbügel ausgebildeten Adapterbock 223 verbundenen abgeflachten Anschlusszapfen 224 Betätigungshebel 225 drehfest angeordnet, wobei zwischen diesen und dem jeweiligen Schenkel des Adapterbockes 223 ein Spalt 226 ausgebildet ist (Fig. 14 b). Fig. 14 a zeigt das Wischerblatt 227 in seiner Montagestellung gegenüber dem Wischerarm 228, an dessen Endstück an den beiden Seitenwänden 229 Rastaufnahmen 230 mit Ausnehmungen 231 ausgebildet sind und auf der dem Wischerblatt 227 abgewandten Seite eine Ausnehmung 232 eingebracht ist. Zur Montage wird der aufgestellte Adapterbock 223 in diese Ausnehmung 232 eingeschoben, wobei die Seitenwände 229 in den jeweiligen Spalt 226 und dabei die Anschlusszapfen 224 in die Rastaufnahmen 230 gleiten. Anschließend wird der Adapterbock 223 um 90° verschwenkt. In seiner Endstellung verrastet dieser mit den Befestigungslaschen 233 der Haltevorrichtung. Zu diesem Zweck ist in jede der Befestigungslaschen 233 eine Rastaufnahme 234 für einen Rastvorsprung 235 eingebracht, der an der Innenseite des jeweiligen Schenkels des Adapterbockes 223 ausgebildet ist. Fig. 14c zeigt das am Wischerarm 228 angeordnete Wischerblatt 227.

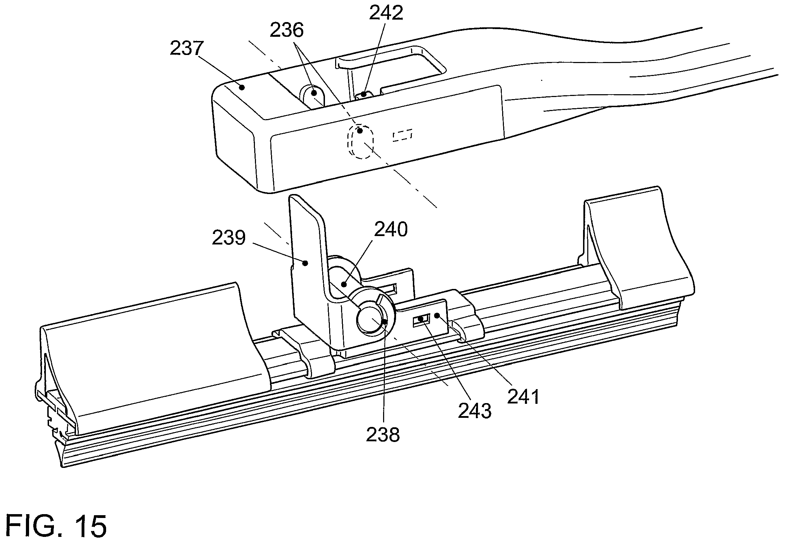

Bei der Ausführung nach Fig. 15 sind die Anschlusszapfen 236 jeweils an der Innenseite der Längsseitenwände des Endstückes 237 angeordnet und die Rastaufnahmen 238 für diese drehfest an einem als Verschlussbügel ausgebildeten Adapterbock 239, der über eine drehfest mit diesem verbundene Hohlwelle 240 an den Befestigungslaschen 241 drehbar gelagert ist. An den Längsseitenwänden und den Befestigungslaschen 241 sind Rastelemente 242, 243 für den gegenseitigen Eingriff in der Verrastungsstellung angeordnet.

### BEZUGSZEICHENLISTE

- 1: Wischerblatt
- 2: Wischerarm
- 3: Federschienen
- 4: Wischerleiste
- 5: Wischlippe
- 6: Fuß
- 7: Haltevorrichtung
- 8: Anschlußbolzen
- 9: Adapterbock
- 10: Lager
- 11: Einführspalt
- 12: Schlitz
- 13: Ausnehmung
- 14: Führungsfläche
- 15.1: Ausnehmung
- 15.2: Ausnehmung
- 16: Rastnase
- 16.1: Rastnase
- 17: Zunge
- 18: Bedienungshandhabe
- 19: Endstück
- 20: Rastausnehmung
- 21: Adapterbock
- 22: Endstück
- 23: Gleitklotz
- 24: Endstück
- 25: Spaltöffnung
- 26: Adapterbock
- 27: Endstück
- 28: Drehknopf
- 29: Öffnung
- 30: Adapterbock
- 31: Zunge
- 32: Rastknopf
- 33: Rastausnehmung
- 34: Rastvorsprung
- 35: Öffnung
- 36: Endstück
- 37: Adapterbock
- 38: Anschlagfläche
- 39: Endstück
- 40: Rastausnehmung
- 41: Vorsprung
- 42: Anschlußbolzen
- 43: Adapterbock
- 44: Endstück
- 45: Rastaufnahme
- 46: Einführöffnung
- 47: Rastausnehmung
- 48: Adapterbock
- 49: Stirnwandung
- 50: Federmittel
- 51: Führungsnut
- 52: Endstück
- 53: Anschlußbolzen
- 54: Adapterbock
- 55: Endstück
- 56: Kulissenführung
- 57: Einführspalt
- 58: Haltevorrichtung
- 59: Fuß
- 60: Adapterbock
- 61: Öffnung
- 62: Endstück
- 63: Öffnung
- 64: Rastelement
- 65: Rastschiene
- 66: Anschlagelement
- 67: Wandung
- 68: Wandung
- D: Abflachung
- 201: Wischerblatt
- 202: Wischerarm
- 203: Federschiene
- 204: Wischerleiste
- 205: Wischlippe
- 206: Endstück
- 207: Haltevorrichtung
- 208: Grundplatte
- 209: Fuß
- 210: Befestigungslasche
- 211: Verschlussbügel/ Adapterbock
- 212: Bolzen
- 213: Anschlusszapfen
- 214: Zunge
- 215: Absenkung
- 216: -
- 217: Ausnehmung
- 218: Seitenwand
- 219: Rastaufnahme
- 220: Ausnehmung
- 221: Einsenkung
- 222: Rastvorsprung
- 223: Verschlussbügel/ Adapterbock
- 224: Anschlusszapfen
- 225: Betätigungshebel
- 226: Spalt
- 227: Wischerblatt
- 228: Wischerarm
- 229: Seitenwand
- 230: Rastaufnahme
- 231: Ausnehmung
- 232: Ausnehmung
- 233: Befestigungslasche
- 234: Rastaufnahme
- 235: Rastvorsprung
- 236: Anschlusszapfen
- 237: Endstück
- 238: Rastaufnahme
- 239: Verschlussbügel/ Adapterbock
- 240: Hohlwelle
- 241: Befestigungslasche
- 242: Rastelement
- 243: Rastelement

- 302: Wischerarm
- 303: Endstück
- 304: Führungsschiene
- 305: Wischerblatt
- 306: Adapterbock
- 307: Haltevorrichtung
- 308: Rastöffnung
- 309: Rastknopf
- 310: Zunge
- 311: Anschlagbock
- 312: Arretierungsbock
- 313: Kante
- 314: Adapterbock
- 315: Führungsnut
- 316: Endstück
- 317: Anschlaglasche
- 318: Haltevorrichtung
- 319: Arretierungsbock
- 320: Führungsschiene
- 321: Anschlagfläche

## Patentansprüche

1. Anschlussvorrichtung für ein Wischerblatt am Wischerarm einer Scheibenwischeranlage, das aus einem federelastischen Tragelement mit einer Wischerleiste gebildet ist, mit einer an den Außenkanten des Tragelementes befestigten Haltevorrichtung und einem quer zur Längsausdehnung des Wischerblattes an der Haltevorrichtung angeordneten Anschlussbolzen, wobei an dem Anschlussbolzen ein Adapterbock angelenkt ist, mit dem das an diesen angepasste Endstück des Wischerarmes über eine Rastverbindung oder Verklinkung lösbar verbindbar und im montierten Zustand fest verbunden ist, und wobei der Adapterbock derart ausgebildet ist, dass der Anschlussbolzen und damit auch das Wischerblatt eine durch die Wölbung der Fahrzeugscheibe bedingte und bestimmte Schwingbewegung gegenüber diesem ausführen kann, **dadurch gekennzeichnet, dass** der Adapterbock (48) ein die Haltevorrichtung (7) einschließendes Gussteil mit einer zylinderförmigen Mantelfläche und mit einer stirnseitig auf der dem Wischerarmende abgewandten Seite vorstehenden Anschlagfläche (49) ist, das mit seiner Längsachse parallel zum Wischerblatt (1) angeordnet ist, dass in der Mantelfläche achsparallel zwei Führungsnuten (51) für einen Bajonettverschluss ausgebildet sind, in die jeweils ein im Endstück (52) des Wischerarmes (2) angeordneter Führungsstift eingreift, und dass die Verschlussposition durch an der Anschlagfläche (49) angeordnete Federmittel (50) gesichert ist, die das Endstück (52) in Richtung des Wischerarmes (2) beaufschlagen.

2. Anschlussvorrichtung für ein Wischerblatt am Wischerarm einer Scheibenwischeranlage, das aus einem federelastischen Tragelement mit einer Wischerleiste gebildet ist, mit einer an den Außenkanten des Tragelementes befestigten Haltevorrichtung und einem quer zur Längsausdehnung des Wischerblattes an der Haltevorrichtung angeordneten Anschlussbolzen, wobei an dem Anschlussbolzen ein Adapterbock angelenkt ist, mit dem das an diesen angepasste Endstück des Wischerarmes über eine Rastverbindung oder Verklinkung lösbar verbindbar und im montierten Zustand fest verbunden ist, und wobei der Adapterbock derart ausgebildet ist, dass der Anschlussbolzen und damit auch das Wischerblatt eine durch die Wölbung der Fahrzeugscheibe bedingte und bestimmte Schwingbewegung gegenüber diesem ausführen kann, **dadurch gekennzeichnet, dass** der Adapterbock (54) fest mit der Haltevorrichtung (7) verbunden und der Anschlussbolzen (53) beidseits desselben vorsteht und parallel zum Wischerblatt (1) abgeflacht und dabei gegenüber diesem konkav gekrümmt ist, dass der Adapterbock (54) auf der dem Wischerblatt (1) abgewandten Seite gegenüber diesem und in dessen Längsrichtung konkav gewölbt ist, dass beidseits des Endstückes (55) eine lang gestreckte und mit dem jeweiligen vorstehenden Ende des Anschlussbolzens (53) und dessen Krümmung korrespondierende Ausnehmung (56) eingebracht ist, an der zum Einführen des Endes des Anschlussbolzens (53) auf der dem Ende des Wischerarmes (2) zugewandten Seite eine auf das Wischerblatt (1) gerichtete Spaltausbildung (57) ausgebildet ist, und dass in der Verrastungsstellung der Anschlussbolzen (53) in der Ausnehmung (56) hin- und her beweglich angeordnet ist und das Endstück (55) auf dem Adapterbock (54) neigbar aufliegt.

3. Anschlussvorrichtung für ein Wischerblatt am Wischerarm einer Scheibenwischeranlage, das aus einem federelastischen Tragelement mit einer Wischerleiste gebildet ist, mit einer an den Außenkanten des Tragelementes befestigten Haltevorrichtung und einem quer zur Längsausdehnung des Wischerblattes an der Haltevorrichtung angeordneten Anschlussbolzen, wobei an dem Anschlussbolzen ein Adapterbock angelenkt ist, mit dem das an diesen angepasste Endstück des Wischerarmes über eine Rastverbindung oder Verklinkung lösbar verbindbar und im montierten Zustand fest verbunden ist, und wobei der Adapterbock derart ausgebildet ist, dass der Anschlussbolzen und damit auch das Wischerblatt eine durch die Wölbung der Fahrzeugscheibe bedingte und bestimmte Schwingbewegung gegenüber diesem ausführen kann, **dadurch gekennzeichnet, dass** der Adapterbock (60) auf der dem Wischerblatt (1) abgewandten Seite eine rechteckige Öffnung (61) aufweist, die mit einer am Endstück (62) ausgebildeten rechteckigen, jedoch breiteren Öffnung (63) korrespondiert, und dass in der Verrastungsstellung des Adapterbockes (60) mit dem Endstück (62) in diesen Öffnungen (61, 63) ein V-förmiges, elastisch zusammendrückbares Rastelement (64) anordbar ist, das mit an dessen Außenseiten angeordneten Rastschienen (65) den Adapterbock (60) an der Öffnung (61) untergreift und mit an den freien Schenkelenden nach außen ausgebildeten Anschlagschienen (66) auf dem Rand der Öffnung (63) am Endstück (62) aufliegt.

4. Anschlussvorrichtung für ein Wischerblatt am Wischerarm einer Scheibenwischeranlage, das aus einem federelastischen Tragelement mit einer Wischerleiste gebildet ist, mit einer an den Außenkanten des Tragelementes befestigten Haltevorrichtung und einem quer zur Längsausdehnung des Wischerblattes an der Haltevorrichtung angeordneten Anschlussbolzen, wobei an dem Anschlussbolzen ein Adapterbock angelenkt ist, mit dem das an diesem angepasste Endstück des Wischerarmes über eine Rastverbindung oder Verklinkung lösbar verbindbar und im montierten Zustand fest verbunden ist, und wobei der Adapterbock derart ausgebildet ist, dass der Anschlussbolzen und damit auch das Wischerblatt eine durch die Wölbung der Fahrzeugscheibe bedingte und bestimmte Schwingbewegung gegenüber diesem ausführen kann, und wobei das Endstück (303, 316) den Adapterbock (306, 314) mit zwei Führungsschienen (304, 320) untergreift, dass am Adapterbock (306, 314) auf der dem Wischerblatt (305) abgewandten Seite eine federelastische Zunge (310) mit einem Rastkopf (309) angeformt und am Endstück (303, 316) eine Rastöffnung (308) für diesen ausgebildet ist, **dadurch gekennzeichnet, dass** an der Haltevorrichtung (307, 318) Arretierungsmittel (312, 319, 321) vorgesehen sind, mit denen am Endstück (303, 316) ausgebildete Anschlagmittel (304, 317, 320) in der Arbeitsstellung des Scheibenwischers an der Fahrzeugscheibe in Eingriff stehen, derart, dass das Endstück (303, 316) in der Arbeitsstellung unlösbar mit dem Adapterbock (306, 314) verbunden ist.

5. Anschlussvorrichtung nach Anspruch 4, **dadurch gekennzeichnet, dass** zusätzlich am Adapterbock (306) Arretierungsmittel vorgesehen sind, mit denen am Endstück (303) ausgebildete Anschlagmittel (304) in der Arbeitsstellung des Scheibenwischers an der Fahrzeugscheibe in Eingriff stehen, wobei als Arretierungsmittel ein an wenigstens einer Außenseiten des Adapterbockes (306) ausgebildeter und dem Endstück (303) entgegen gerichteter Anschlagbock (311) und ein an wenigstens einer Außenseite der Haltevorrichtung (307) an derem wischerarmseitigen Ende angeformter Arretierungsbock (312) dienen, und dass die jeweilige Führungsschiene (304) mit ihren Stirnseiten als Anschlagmittel für diese dient.

6. Anschlussvorrichtung nach Anspruch 4, **dadurch gekennzeichnet, dass** am Adapterbock (314) auf der dem Wischerblatt (305) abgewandten Seite eine Führungsnut (315) ausgebildet ist, dass an der Haltevorrichtung (318) als Arretierungsmittel ein an derem wischerarmseitigen Ende angeformter Arretierungsbock (319) und auf der diesem gegenüberliegenden Seite eine Anschlagfläche (321) ausgebildet sind und am Endstück (316) als Anschlagmittel eine an dessen Stirnseite angeordnete Anschlaglasche (317) und die Führungsschienen (320) dienen.

## Claims

1. Connecting device for a wiper blade on the wiper arm of a windshield wiper system, said wiper blade being formed from a resilient supporting element with a wiper strip, the connecting device comprising a holding device fastened to outer edges of the supporting element and a connecting bolt disposed on the holding device and extending transversely to a longitudinal extent of the wiper blade, wherein an adaptor bracket is articulated on said connecting bolt, to which the end piece disposed on the wiper arm and matched to said adaptor bracket is releasably connectable via a latching connection or locking means and is fixedly connected in an assembled state, and wherein the adaptor bracket is configured to enable said connecting bolt, and the wiper blade, to execute a swinging movement relative to said adaptor bracket, with the swinging movement being caused and defined by an arching of the vehicle windshield, **characterized in that** the adaptor bracket (48) is a cast part which encloses the holding device (7) and has a cylindrical lateral surface and with a stop surface (49) which protrudes on the end side, on the side facing away from the wiper arm end, and is disposed with its longitudinal axis parallel to the wiper blade (1), **in that** two guide grooves (51) for a bayonet-type closure are formed axially parallel in the lateral surface and in both of which a guide pin disposed in the end piece (52) of the wiper arm (2) engages, and **in that** the closure position is secured by spring means (50) which are disposed on the stop surface (49) and act upon the end piece (52) in the direction of the wiper arm (2).

2. Connecting device for a wiper blade on the wiper arm of a windshield wiper system, said wiper blade being formed from a resilient supporting element with a wiper strip, the connecting device comprising a holding device fastened to outer edges of the supporting element and a connecting bolt disposed on the holding device and extending transversely to a longitudinal extent of the wiper blade, wherein an adaptor bracket is articulated on said connecting bolt, to which the end piece disposed on the wiper arm and matched to said adaptor bracket is releasably connectable via a latching connection or locking means and is fixedly connected in an assembled state, and wherein the adaptor bracket is configured to enable said connecting bolt, and the wiper blade, to execute a swinging movement relative to said adaptor bracket, with the swinging movement being caused and defined by an arching of the vehicle windshield, **characterized in that** the adaptor bracket (54) is fixedly connected to the holding device (7) and the connecting bolt (53) protrudes on both sides of said adaptor bracket and is flattened parallel to the wiper blade (1) and is curved concavely with respect thereto, **in that** the adaptor bracket (54), on the side facing away from the wiper blade (1), is arched concavely with respect to the latter and in the longitudinal direction thereof, **in that** an elongate recess (56) which corresponds with the respective protruding end of the connecting bolt (53) and the curvature thereof is placed on both sides of the end piece (55), and, on said recess, in order to introduce the end of the connecting bolt (53), on the side facing the end of the wiper arm (2), a gap formation (57) directed towards the wiper blade (1) is formed, and **in that**, in the latching position, the connecting bolt (53) is arranged in a manner such that it can move to and fro in the recess (56), and the end piece (55) rests in an inclinable manner on the adaptor bracket (54).

3. Connecting device for a wiper blade on the wiper arm of a windshield wiper system, said wiper blade being formed from a resilient supporting element with a wiper strip, the connecting device comprising a holding device fastened to outer edges of the supporting element and a connecting bolt disposed on the holding device and extending transversely to a longitudinal extent of the wiper blade, wherein an adaptor bracket is articulated on said connecting bolt, to which the end piece disposed on the wiper arm and matched to said adaptor bracket is releasably connectable via a latching connection or locking means and is fixedly connected in an assembled state, and wherein the adaptor bracket is configured to enable said connecting bolt, and the wiper blade, to execute a swinging movement relative to said adaptor bracket, with the swinging movement being caused and defined by an arching of the vehicle windshield, **characterized in that** the adaptor bracket (60) is provided on the side facing away from the wiper blade (1) with a rectangular opening (61) which corresponds with a rectangular, but wider opening (63) formed on the end piece (62), and **in that**, in the latching position of the adaptor bracket (60) with the end piece (62) in said openings (61, 63), a V-shaped, elastically compressible latching element (64) is disposable which, with latching rails (65), which are arranged on its outer sides, engages under the adaptor bracket (60) at the opening (61) and, by means of stop rails (66) formed outwardly on the free limb ends, rests on the edge of the opening (63) on the end piece (62).

4. Connecting device for a wiper blade on the wiper arm of a windshield wiper system, said wiper blade being formed from a resilient supporting element with a wiper strip, the connecting device comprising a holding device fastened to outer edges of the supporting element and a connecting bolt disposed on the holding device and extending transversely to a longitudinal extent of the wiper blade, wherein an adaptor bracket is articulated on said connecting bolt, to which the end piece disposed on the wiper arm and matched to said adaptor bracket is releasably connectable via a latching connection or locking means and is fixedly connected in an assembled state, and wherein the adaptor bracket is configured to enable said connecting bolt, and the wiper blade, to execute a swinging movement relative to said adaptor bracket, with the swinging movement being caused and defined by an arching of the vehicle windshield, and wherein the end piece (303, 316) engages under the adaptor bracket (306, 314) by means of two guide rails (304, 320), in that the adaptor bracket (306, 314), on the side facing away from the wiper blade (305), has a resilient tongue (310) with a latching knob (309) and a latching opening (308) is formed for the latter on the end piece (303, 316), **characterized in that** retaining means (312, 319, 321) are provided on the holding device (307, 318), with which retaining means stop means (304, 317, 320) formed on the end piece (303, 316) are in engagement in the working position of the windshield wiper on the vehicle windshield in such a manner that the end piece (303, 316) is non-releasably connected to the adaptor bracket (306, 314) in the working position.

5. Connecting device according to Claim 4, **characterized in that** retaining means are additionally provided on the adaptor bracket (306), with which retaining means stop means (304) formed on the end piece (303) are in engagement in the working position of the windshield wiper on the vehicle windshield, wherein the retaining means used are a stop bracket (311) which is formed on at least one outer side of the adaptor bracket (306) and is directed counter to the end piece (303), and a retaining bracket (312) which is integrally formed on at least one outer side of the holding device (307) on its wiper-arm end, and **in that** the end sides of each guide rail (304) serve as a stop means for said retaining means.

6. Connecting device according to Claim 4, **characterized in that** a guide groove (315) is formed on the adaptor bracket (314), on the side facing away from the wiper blade (305), **in that** on the holding device (318) a retaining bracket (319), which is integrally formed on its wiper-arm end, and, on the side opposite said retaining bracket, a stop surface (321) are formed as the retaining means, and a stop tab (317), which is arranged on the end side of the end piece (316), and the guide rails (320) serve as stop means on said end piece.

## Revendications

1. Dispositif de raccordement pour un balai d'essuie-glace sur un bras d'essuie-glace d'une installation d'essuie-glace qui est formé d'un élément de support élastique à ressort comprenant une raclette d'essuie-glace, comprenant un dispositif de retenue fixé aux bords extérieurs de l'élément de support, et un boulon de raccordement disposé transversalement à l'étendue longitudinale du balai d'essuie-glace sur le dispositif de retenue, un support adaptateur étant articulé au boulon de raccordement, auquel le bout du bras d'essuie-glace adapté à celui-ci peut être connecté de manière amovible par le biais d'une connexion par encliquetage ou verrouillage, et auquel il peut être connecté fixement dans l'état monté, et lé support adaptateur étant réalisé de telle sorte que le boulon de raccordement et par conséquent également le balai d'essuie-glace puissent effectuer un mouvement de pivotement causé et déterminé par la courbure de la vitre du véhicule, par rapport à celui-ci, **caractérisé en ce que** le support adaptateur (48) est une partie coulée incluant le dispositif de retenue (7), avec une surface d'enveloppe de forme cylindrique et avec une surface de butée (49) faisant saillie du côté frontal du côté opposé à l'extrémité du bras d'essuie-glace, laquelle surface de butée est disposée avec son axe longitudinal parallèlement au balai d'essuie-glace (1), **en ce que** deux rainures de guidage (51) d'axes parallèles sont réalisées dans la surface d'enveloppe en vue d'une fermeture à baïonnette, une goupille de guidage disposée dans le bout (52) du bras d'essuie-glace (2) venant en prise dans les rainures de guidage respectives, et **en ce que** la position de fermeture est fixée par des moyens de ressort (50) disposés au niveau de la surface de butée (49), lesquels sollicitent le bout (52) dans la direction du bras d'essuie-glace (2).

2. Dispositif de raccordement pour un balai d'essuie-glace sur un bras d'essuie-glace d'une installation d'essuie-glace qui est formé d'un élément de support élastique à ressort comprenant une raclette d'essuie-glace, comprenant un dispositif de retenue fixé aux bords extérieurs de l'élément de support, et un boulon de raccordement disposé transversalement à l'étendue longitudinale du balai d'essuie-glace sur le dispositif de retenue, un support adaptateur étant articulé au boulon de raccordement, auquel le bout du bras d'essuie-glace adapté à celui-ci peut être connecté de manière amovible par le biais d'une connexion par encliquetage ou verrouillage, et auquel il peut être connecté fixement dans l'état monté, et le support adaptateur étant réalisé de telle sorte que le boulon de raccordement et par conséquent également le balai d'essuie-glace puissent effectuer un mouvement de pivotement causé et déterminé par la courbure de la vitre du véhicule, par rapport à celui-ci, **caractérisé en ce que** le support adaptateur (54) est connecté fixement au dispositif de retenue (7) et le boulon de raccordement (53) fait saillie de chaque côté de celui-ci et est aplati parallèlement au balai d'essuie-glace (1) et en l'occurrence présente une courbure concave par rapport à celui-ci, **en ce que** le support adaptateur (54) présente une courbure concave du côté opposé au balai d'essuie-glace (1) par rapport à celui-ci et dans sa direction longitudinale, **en ce que** de chaque côté du bout (55) est pratiqué un évidement (56) allongé et correspondant à l'extrémité saillante respective du boulon de raccordement (53) et à sa courbure, une formation de fente (57) orientée vers le balai d'essuie-glace (1) est réalisée au niveau dudit évidement pour l'introduction de l'extrémité du boulon de raccordement (53) du côté tourné vers l'extrémité du bras d'essuie-glace (2), et **en ce que** le boulon de raccordement (53), dans la position de verrouillage, est disposé de manière déplaçable d'avant en arrière dans l'évidement (56) et le, bout (55) s'applique de manière inclinable sur le support adaptateur (54).

3. Dispositif de raccordement pour un balai d'essuie-glace sur un bras d'essuie-glace d'une installation d'essuie-glace qui est formé d'un élément de support élastique à ressort comprenant une raclette d'essuie-glace, comprenant un dispositif de retenue fixé aux bords extérieurs de l'élément de support, et un boulon de raccordement disposé transversalement à l'étendue longitudinale du balai d'essuie-glace sur le dispositif de retenue, un support adaptateur étant articulé au boulon de raccordement, auquel, le bout du bras d'essuie-glace adapté à celui-ci peut être connecté de manière amovible par le biais d'une connexion par encliquetage ou verrouillage, et auquel il peut être connecté fixement dans l'état monté, et le support adaptateur étant réalisé de telle sorte que le boulon de raccordement et par conséquent également le balai d'essuie-glace puissent effectuer un mouvement de pivotement causé et déterminé par la courbure de la vitre du véhicule, par rapport à celui-ci, **caractérisé en ce que** le support adaptateur (60), sur le côté opposé au balai d'essuie-glace (1), présente une ouverture rectangulaire (61), qui correspond à une ouverture (63) rectangulaire mais plus large réalisée au niveau du bout (62) et **en ce que**, dans la position de verrouillage du support adaptateur (60) avec le bout (62), dans ces ouvertures (61, 63) peut être disposé un élément d'encliquetage (64) en forme de V, pouvant être comprimé élastiquement, qui vient en prise par le dessous au moyen de rails d'encliquetage (65) disposés sur ses côtés extérieurs avec le support adaptateur (60) au niveau de l'ouverture (61) et repose avec des rails de butée (66) réalisés vers l'extérieur au niveau des extrémités libres des branches sur le bord de l'ouverture (63) contre le bout (62).

4. Dispositif de raccordement pour un balai d'essuie-glace sur un bras d'essuie-glace d'une installation d'essuie-glace qui est formé d'un élément de support élastique à ressort comprenant une raclette d'essuie-glace, comprenant un dispositif de retenue fixé aux bords extérieurs de l'élément de support, et un boulon de raccordement disposé transversalement à l'étendue longitudinale du balai d'essuie-glace sur le dispositif de retenue, un support adaptateur étant articulé au boulon de raccordement, auquel le bout du bras d'essuie-glace adapté à celui-ci peut être connecté de manière amovible par le biais d'une connexion par encliquetage ou verrouillage, et auquel il peut être connecté fixement dans l'état monté, et le support adaptateur étant réalisé de telle sorte que le boulon de raccordement et par conséquent également le balai d'essuie-glace puissent effectuer un mouvement de pivotement causé et déterminé par la courbure de la vitre du véhicule, par rapport à celui-ci, et le bout (303, 316) venant en prise par le dessous avec le support, adaptateur (306, 314) par le biais de deux rails de guidage (304, 320), en ce qu'une langue élastique à ressort (310) est façonnée au niveau du support adaptateur (306, 314) du côté opposé au balai d'essuie-glace (305), avec une tête d'encliquetage (309) et une ouverture d'encliquetage (308) est réalisée au niveau du bout (303, 316) pour cette tête, **caractérisé en ce que** des moyens de blocage (312, 319, 321) sont prévus au niveau du dispositif de retenue (307, 318), avec lesquels des moyens de butée (304, 317, 320) réalisés au niveau du bout (303, 316) sont en prise avec la vitre du véhicule dans la position de travail de l'essuie-glace, de telle sorte que le bout (303, 316) soit connecté de manière imperdable au support adaptateur (306, 314) dans la position de travail.

5. Dispositif de raccordement selon la revendication 4, **caractérisé en ce que** des moyens de blocage sont en outre prévus sur le support adaptateur (306), avec lesquels des moyens de butée (304) réalisés au niveau du bout (303) sont en prise avec la vitre du véhicule dans la position de travail de l'essuie-glace, et un support de butée (311) réalisé au niveau d'au moins un côté extérieur du support adaptateur (306) et orienté à l'opposé du bout (303) et un support de blocage (312) façonné au niveau d'au moins un côté extérieur du dispositif de retenue (307) au niveau de son extrémité du côté de l'essuie-glace, servant de moyens de blocage et **en ce que** le rail de guidage respectif (304) avec ses côtés frontaux sert de moyen de butée pour ceux-ci.

6. Dispositif de raccordement selon la revendication 4, **caractérisé en ce qu'**une rainure de guidage (315) est réalisée au niveau du support adaptateur (314) du côté opposé au balai d'essuie-glace (305), **en ce qu'**au niveau du dispositif de retenue (318), sont réalisés en tant que moyens de blocage, un support de blocage (319) formé au niveau de son extrémité du côté du bras d'essuie-glace, et du côté opposé au support de blocage une surface de butée (321) et au niveau du bout (316) en tant que moyens de butée sont utilisées une patte de butée (317) disposée au niveau de son côté frontal ainsi que les rails de guidage (320).
